# EUROPEAN PATENT APPLICATION

(11) **EP 4 726 466 A1**
(43) Date of publication of application: **15.04.2026**
(21) Application number: 24823397.5
(22) Date of filing: 12.06.2024
(51) Int. Cl.: G02F 1/161, G02C 7/10, G02F 1/15

(54) **ELECTROCHROMIC LENS, ELECTROCHROMIC SHEET, AND ELECTROCHROMIC DEVICE**

(30) Priority: 12.06.2023 JP 2023096391; 08.08.2023 JP 2023129084
(71) Applicant: Sumitomo Bakelite Co.Ltd., Shinagawa-ku Tokyo 140-0002 (JP)
(72) Inventor: NISHINO, Satoshi, Tokyo 140-0002 (JP); KITAMURA, Masahiro, Tokyo 140-0002 (JP); NAKAMURA, Tadashi, Tokyo 140-0002 (JP); MATSUI, Tomoki, Tokyo 140-0002 (JP)
(74) Representative: Müller-Boré & Partner Patentanwälte PartG mbB
(86) International application number: PCT/JP2024/021286
(87) International publication number: WO 2024/257782

(57) **Abstract**

An electrochromic lens (300) includes an electrochromic element (10); a sealing member (8) that covers a side surface of the electrochromic element (10); and a pair of transparent base material layers (a first transparent base material layer (1) and a second transparent base material layer (7)) that sandwich the electrochromic element (10) and the sealing member (8), and satisfies a predetermined Requirement a.

## Description

### TECHNICAL FIELD

The present invention relates to an electrochromic lens, an electrochromic sheet, and an electrochromic device. More specifically, the present invention relates to an electrochromic lens, an electrochromic sheet, an electrochromic device, and a method for using the electrochromic sheet.

### BACKGROUND ART

An electrochromic element is known as an element utilizing electrochromism that is a phenomenon in which a redox reaction occurs reversibly by applying a voltage, and a transmittance changes reversibly. For example, due to the fact that color development can be obtained by applying a positive voltage to the electrochromic element and a transparent state can be obtained by applying a negative voltage to the electrochromic element to cause decoloration, it is possible to carry out color development and decoloration in the electrochromic element at any timing by providing a switch that is capable of carrying out switching between application of a positive voltage and application of a negative voltage.

In addition, from the viewpoint of, for example, enhancing the utility of the electrochromic element, a structure in which an electrochromic element is sandwiched between a pair of transparent electrode layers for a positive electrode and a negative electrode is widely known. From the viewpoint of obtaining good light transmittance, indium tin oxide (ITO) obtained by adding tin oxide to indium oxide is usually used as a material of such transparent electrode layers.

For example, Patent Document 1 (Japanese Unexamined Patent Publication No. 2022-176332) discloses an electronic element for electrochromic glasses, the electronic element including a pair of transparent electrode layers formed of ITO and a light control layer provided between the pair of transparent electrode layers.

In addition, in recent years, a lens including an optical sheet having a polarizing film having polarizing properties or a half mirror layer capable of imparting designability by selectively reflecting light in a specific wavelength range on a surface thereof has been proposed as a lens included in eyewear such as glasses and sunglasses.

Therefore, by applying an electrochromic element as the optical sheet to a lens of eyewear such as glasses and sunglasses, it is expected that a lens capable of switching between color development and decoloration at any timing by a switch can be obtained.

For example, Patent Document 2 discloses a lens for eyewear, using an electrochromic element. Specifically, in the lens, a sealed cavity filled with an electrochromic composition is sandwiched, from above and below, between two transparent layers, and the periphery of the cavity is sealed with a seal formed of an adhesive material.

### RELATED DOCUMENTS

### PATENT DOCUMENTS

[Patent Document 1] Japanese Unexamined Patent Publication No. 2022-176332
[Patent Document 2] International Publication WO2017/009563

### SUMMARY OF THE INVENTION

### TECHNICAL PROBLEM

In the related art, since the electrochromic element as disclosed in Patent Document 1 is used for a lens such as eyewear, attention has been focused on the light transmittance in order to ensure favorable transmission of light.

On the other hand, with the recent rise in interest in electrochromic elements and advancements in related technologies, there is, for example, a demand for lenses such as eyewear, incorporating electrochromic elements, to be designed with high precision to achieve a desired tint.

The present inventors have conducted intensive studies from the viewpoint of increasing the degree of freedom in design of a tint. Thus, they have found that with regard to the related art as disclosed in Patent Document 1, even in a case where the light transmittance is good, there is room for improvement in terms of the degree of freedom in design of the tint due to slightly yellowish reflected light.

Then, the present inventors have devised a new index for controlling such reflected light and have designed an electrochromic sheet to satisfy the index. Thus, the present inventors have found that such problems can be solved, thereby completing the present invention.

In addition, the present inventors have conducted studies on the technique disclosed in Patent Document 2, in which the visual field of a lens is narrowed by a seal (sealing member) surrounding the cavity and the visual comfort is lowered due to the lens being visually recognized by the user, and since the technology focuses on limiting the width of the seal (sealing member) surrounding the cavity to less than 1,000 micrometers, the moisture barrier properties or oxygen gas barrier properties due to the seal are reduced. Therefore, it has been revealed that the color activation and deactivation performance such as a tint, a speed, and color development stability of the electrochromic sheet may be reduced.

### SOLUTION TO PROBLEM

The present inventors have realized new requirements for an electrochromic lens that can obtain a good appearance while maintaining the performance of the electrochromic lens, thereby completing a first present invention.

In addition, the present inventors have conducted intensive studies to improve the degree of freedom in design of a tint, and as a result, they have devised a new index for controlling slightly yellowish reflected light, and have found that it is effective to design an electrochromic sheet to satisfy the index, thereby completing a second invention.

According to a first invention, the following electrochromic lenses and techniques related thereto are provided.
[1] An electrochromic lens including:
   an electrochromic element;
   a sealing member that covers a side surface of the electrochromic element; and
   a pair of transparent base material layers that sandwich the electrochromic element and the sealing member,
   in which the electrochromic lens satisfies the following Requirement a.
   (Requirement a) In a case where a length of an edge on an inner peripheral side of the sealing member is taken as L (mm), an area of a region occupied by the sealing member is taken as S (mm²), and S/L is taken as W (mm), which are measured in an orthographic projection in a case of viewing the sealing member through the transparent base material layer from an upper surface of the electrochromic lens,
   a first region where W is less than 1 mm and a second region where W is equal to or more than 1.5 mm are present,
   in a case where an area of the first region is taken as S1 (mm²) and an area of the second region is taken as S2 (mm²), S1/S (percentage) is equal to or more than 50% and S2/S (percentage) is 1% to 40%, and
   in a case where a length of 4 mm at any position of the edge on the inner peripheral side of the sealing member is taken as La, an area of a region occupied by the sealing member including La is taken as Sa (mm²), and Sa/La is taken as Wa (mm), the second region includes a region where Wa (mm) is equal to or more than 1.5 mm.
[2] The electrochromic lens according to [1],
   in which the electrochromic lens has a through electrode that penetrates the sealing member in the second region.
[3] The electrochromic lens according to [1] or [2],
   in which the electrochromic lens has a grip part in the second region.
[4] The electrochromic lens according to any one of [1] to [3],
   in which the sealing member is formed of a resin composition including a curable resin.
[5] The electrochromic lens according to any one of [1] to [4],
   in which the electrochromic element is a solid or a gel, having a laminated structure in which an electrolyte layer and an electrochromic layer are laminated.
[6] The electrochromic lens according to [5],
   in which the electrolyte layer is a solid or a gel.
[7] The electrochromic lens according to any one of [1] to [6], further including:
   an electrode layer between the transparent base material layer and the electrochromic element.
[8] The electrochromic lens according to any one of [1] to [7],
   in which the transparent base material layer includes one or two or more selected from an episulfide-based resin, a thiourethane-based resin, an acrylic resin, a polycarbonate-based resin, a urethane-based resin, a polyamide-based resin, a polyester-based resin, a cellulose-based resin, a cycloolefin polymer (COP), a cycloolefin copolymer (COC), a norbornene-based resin, and a silicone-based resin.
[9] An electrochromic device using the electrochromic lens according to any one of [1] to [8].
[10] A method for using an electrochromic sheet, the method including:
   processing an electrochromic sheet to form an electrochromic lens satisfying the following Requirement b, using the electrochromic sheet,
   in which the electrochromic sheet includes:
      an electrochromic element;
      a sealing member that covers a side surface of the electrochromic element; and
      a pair of transparent base material layers that sandwich the electrochromic element and the sealing member.

(Requirement b) In a case where a length of an edge of the sealing member on an inner peripheral side is taken as L (mm), an area of a region occupied by the sealing member is taken as S (mm²), and S/L is taken as W (mm), which are measured in an orthographic projection in a case of viewing the sealing member through the transparent base material layer from an upper surface of the electrochromic lens,
a first region where W is less than 1 mm and a second region where W is equal to or more than 1.5 mm are present,
in a case where an area of the first region is taken as S1 (mm²) and an area of the second region is taken as S2 (mm²), S1/S (percentage) is equal to or more than 50% and S2/S (percentage) is 1% to 40%, and
in a case where a length of 4 mm at any position of the edge on the inner peripheral side of the sealing member is taken as La, an area of a region occupied by the sealing member including La is taken as Sa (mm²), and Sa/La is taken as Wa (mm), the second region includes a region where Wa (mm) is equal to or more than 1.5 mm.

In addition, according to a second invention, the following electrochromic sheets and techniques related thereto are provided.
[1] An electrochromic sheet including:
   a support layer;
   an electrolyte layer provided over the support layer;
   an electrochromic layer provided over at least one surface of the electrolyte layer; and
   a pair of transparent electrode layers provided over the support layer and positioned to sandwich the electrolyte layer and the electrochromic layer,
   in which the electrochromic sheet is configured to satisfy the following Condition 1.

### (Condition 1)

a* and b* in CIE 1976 L*a*b* chromaticity coordinates of reflected light obtained by irradiating a surface of the electrochromic sheet on a side of the support layer with light at an incidence angle of 90° from a D65 light source are -15 to 15 and -20 to 10, respectively, in a case where the reflected light is measured at a viewing angle of 10° using a spectrophotometer.

[2] The electrochromic sheet according to [1],
in which the electrochromic sheet is further configured to satisfy the following Condition 2.

### (Condition 2)

L* in CIE 1976 L*a*b* chromaticity coordinates of reflected light obtained by irradiating a surface of the electrochromic sheet on a side of the support layer with light from a D65 light source at an incidence angle of 90° is 20 to 50 in a case where the reflected light is measured at a viewing angle of 10° using a spectrophotometer.

[3] The electrochromic sheet according to [1] or [2],
in which the electrochromic sheet is further configured to satisfy the following Condition 3.

### (Condition 3)

A transmittance of light obtained by irradiating a surface of the electrochromic sheet on a side of the support layer with light at an incidence angle of 90° from a D65 light source is 70% to 99% in a case where transmitted light is measured at a viewing angle of 10° using a spectrophotometer.

[4] The electrochromic sheet according to any one of [1] to [3], further including:
a sealing member provided over the support layer and covering side surfaces of the electrolyte layer and the electrochromic layer,
in which the electrochromic sheet is further configured to satisfy the following Condition 4.

### (Condition 4)

In a case where a test piece (having a maximum length of equal to or more than 20 mm) in which the electrolyte layer is located at a central part and the sealing member is located at an outer edge is manufactured using the electrochromic sheet, the test piece is chucked at both ends by a chucking part, the central part of the test piece is pressed at 30 N for 30 seconds, and a difference in depth between the central part of the test piece before being pressed and the central part of the test piece after being pressed is defined as a deformation amount (mm), the deformation amount is 0.01 mm to 0.09 mm.

[5] The electrochromic sheet according to any one of [1] to [4],
in which a thickness of the transparent electrode layer is 40 to 200 nm.

[6] The electrochromic sheet according to any one of [1] to [5],
in which at least one of the pair of the transparent electrode layers has a multilayer structure.

[7] The electrochromic sheet according to any one of [1] to [6],
in which the transparent electrode layer contains one or two or more selected from tin-doped indium oxide (ITO), fluorine-doped tin oxide (FTO), antimony-doped tin oxide (ATO), zinc-doped indium oxide (IZO), silver (Ag) and a silver alloy, as well as polypyrrole, polyaniline, polythiophene, poly(p-phenylene), polyfluorene, and derivatives thereof.

[8] The electrochromic sheet according to any one of [1] to [6],
in which the transparent electrode layer has a single-layer or multilayer structure including a layer formed of any material selected from tin-doped indium oxide (ITO), fluorine-doped tin oxide (FTO), antimony-doped tin oxide (ATO), zinc-doped indium oxide (IZO), ad silver (Ag), and a silver alloy, and a polypyrrole, a polyaniline, a polythiophene, a poly(p-phenylene), a polyfluorene, and derivatives thereof.

[9] The electrochromic sheet according to any one of [1] to [8],
in which materials constituting the pair of transparent electrode layers are different from each other.

[10] The electrochromic sheet according to any one of [1] to [8],
in which materials constituting the pair of transparent electrode layers are the same as each other.

[11] The electrochromic sheet according to any one of [1] to [10],
in which the support layer includes one or two or more selected from an episulfide-based resin, a thiourethane-based resin, an acrylic resin, a polycarbonate-based resin, a urethane-based resin, a polyamide-based resin, a polyester-based resin, a cellulose-based resin, a cycloolefin polymer (COP), a cycloolefin copolymer (COC), a norbornene-based resin, and a silicone-based resin.

[12] An electrochromic device using the electrochromic sheet according to any one of [1] to [11].

### ADVANTAGEOUS EFFECTS OF INVENTION

The present invention provides an electrochromic sheet that can improve the degree of freedom in design of a tint, and also provides an electrochromic lens capable of obtaining a good appearance while maintaining performance as an electrochromic lens.

### BRIEF DESCRIPTION OF THE DRAWINGS

FIG. 1 is a schematic cross-sectional view showing an example of an electrochromic sheet of the present embodiment.
FIG. 2 is a schematic view showing a method for producing a lens using the electrochromic sheet of the present embodiment.
FIG. 3 is a schematic plan view and a schematic cross-sectional view of the electrochromic lens of the present embodiment.
FIG. 4 is a schematic plan view showing an example in which a grip part is provided in the electrochromic lens of the present embodiment.

### DESCRIPTION OF EMBODIMENTS

Hereinafter, embodiments of the present invention will be described in more detail with reference to the accompanying drawings.

To avoid complications, in a case where there are a plurality of identical constitutional elements in the same drawing, a reference numeral may only be applied to one thereof and reference numerals may not be applied to all. All drawings are for illustration purposes only. The shape, the dimension ratio, and the like of each member in the drawings do not necessarily correspond to those of a real article.

In the present specification, a notation "a to b" in the description of numerical ranges represents equal to or more than a and equal to or less than b unless otherwise specified. For example, "1% to 5% by mass" means "equal to or more than 1% by mass and equal to or less than 5% by mass". In addition, the lower limit value and the upper limit value of the numerical value range can be respectively combined with the lower limit value and the upper limit value of other numerical value ranges.

Each component and material exemplified in the present specification may be used alone or in a combination of two or more kinds thereof, unless otherwise specified.

In the present embodiment, the term "cover" is not limited to a case where the covering is continuous, and it is also intended to mean cases where the covering is partially discontinuous in portions.

The electrochromic lens of the present embodiment is an electrochromic lens processed to correspond to a desired lens, using an electrochromic sheet.

Therefore, first, an electrochromic sheet 100 of the present embodiment will be described.

### <Electrochromic Sheet>

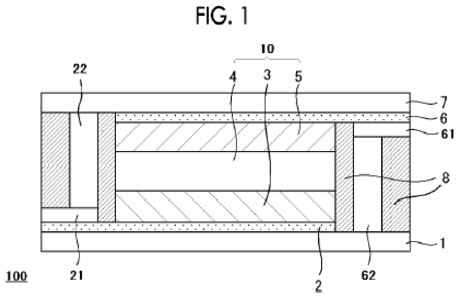

FIG. 1 is a schematic cross-sectional view showing an example of an embodiment of the electrochromic sheet 100.

As shown in FIG. 1, the electrochromic sheet 100 includes a laminate (hereinafter also referred to as an "electrochromic element 10"), in which an electrolyte layer 4, a first electrochromic layer 3, and a second electrochromic layer 5 are laminated in this order, a sealing member 8 that covers a side surface of the electrochromic element 10, and a pair of support layers (a first transparent base material layer 1 and a second transparent base material layer 7) that sandwich upper and lower surfaces of each of the electrochromic element 10 and the sealing member 8.

In other words, the electrochromic sheet 100 includes the first electrochromic layer 3, the electrolyte layer 4, the second electrochromic layer 5, and the second transparent base material layer 7, which are sequentially laminated on the first transparent base material layer 1, and the side surfaces of each of the first electrochromic layer 3, the electrolyte layer 4, and the second electrochromic layer 5 are covered with the sealing member 8.

Furthermore, the electrochromic sheet 100 of the present embodiment has the first transparent electrode layer 2 between the first transparent base material layer 1 and the first electrochromic layer 3, and has the second transparent electrode layer 6 between the second transparent base material layer 7 and the second electrochromic layer 5.

In other words, the electrochromic sheet 100 is provided on the first transparent base material layer 1 (support layer), and includes a pair of electrode layers (the first transparent electrode layer 2 and the second transparent electrode layer 6) positioned to sandwich the electrochromic layer 3, the electrolyte layer, and the electrochromic layer 5. In the present embodiment, the first transparent electrode layer 2 and the second transparent electrode layer 6 are transparent.

Furthermore, the term "transparent" is intended to mean that the transmittance of transmitted light obtained by irradiating the composition with light at an incidence angle of 90° from a D65 light source is equal to or more than 65% and the haze is equal to or less than 3.0.

Furthermore, as shown in FIG. 1, the electrochromic sheet 100 has a first columnar conductive part 22 and a second columnar conductive part 62 that penetrate in the thickness direction of the sealing member 8. Both the first columnar conductive part 22 and the second columnar conductive part 62 are electrically connected to the electrolyte layer 4.

In addition, the first columnar conductive part 22 penetrates the sealing member 8 and reaches the second transparent base material layer 7 from a first auxiliary electrode layer 21 provided on the first transparent electrode layer 2. Similarly, the second columnar conductive part 62 penetrates the sealing member 8 and reaches the first transparent base material layer 1 from a second auxiliary electrode layer 61 provided on the second transparent electrode layer 6.

In the present embodiment, the electrochromic sheet 100 is described by way of an example in which the first electrochromic layer 3 and the second electrochromic layer 5 are laminated on both sides of the electrolyte layer 4, but only one of the electrochromic layers may be present.

In addition, FIG. 1 shows a part of the electrochromic sheet 100, focusing on a single electrochromic element 10 and a portion of the sealing member 9 surrounding the electrochromic element 10. However, the electrochromic sheet 100 may be configured such that a plurality of electrochromic elements 10 are partitioned by the sealing members 8 that cover side surfaces of each electrochromic element 10.

The electrochromic sheet 100 of the present embodiment is configured to satisfy the following Condition 1. As a result, the degree of freedom in design of tints of the electrochromic sheet 100, and the lens and the like using the electrochromic sheet 100 can be improved. That is, in the related art, even in a case where the electrochromic sheet is colored, a desired tint may not be obtained, whereas according to the electrochromic sheet 100 of the present embodiment, the a* value and the b* value of the reflected light measured by a predetermined method can be controlled to suppress the generation of the tint in the reflected light itself, making it easier to obtain a desired tint.

Furthermore, according to the electrochromic sheet 100 of the present embodiment, the processability (mechanical strength) can be improved.

### (Condition 1)

a* and b* in CIE 1976 L*a*b* chromaticity coordinates of reflected light obtained by irradiating a surface of the electrochromic sheet 100 on the side of the first transparent base material layer 1 (support layer) with light at an incidence angle of 90° from a D65 light source are -15 to 15 and -20 to 10, respectively, in a case where the reflected light is measured at a viewing angle of 10° using a spectrophotometer.

Although the details of the mechanism by which such an effect of action is obtained are not clear, it is considered that by controlling the a* value and the b* value of reflected light instead of transmitted light, the tint of the appearance of the electrochromic sheet 100 can be highly controlled, a desired tint can be obtained, and the degree of freedom in design can be expanded.

In Condition 1, a* is -15 to 15, preferably -10 to 10, and more preferably -5 to 5.

In Condition 1, b* is -20 to 10, preferably -15 to 5, and more preferably -10 to 0.

The electrochromic sheet 100 of the present embodiment is further configured to satisfy the following Condition 2. As a result, the degree of freedom in design of a tint of the electrochromic sheet 100, and the lens and the like using the electrochromic sheet 100 can be improved with high accuracy.

### (Condition 2)

L* in CIE 1976 L*a*b* chromaticity coordinates of reflected light obtained by irradiating a surface of the electrochromic sheet 100 on the first transparent base material layer 1 (support layer) with light from a D65 light source at an incidence angle of 90° is 20 to 50 in a case where the reflected light is measured at a viewing angle of 10° using a spectrophotometer.

In Condition 2, L* is 20 to 50, preferably 25 to 45, and more preferably 30 to 40.

The electrochromic sheet 100 of the present embodiment is further configured to satisfy the following Condition 3. As a result, the degree of freedom in design of a tint of the electrochromic sheet 100, and the lens and the like using the electrochromic sheet 100 can be improved with high accuracy.

### (Condition 3)

A transmittance of transmitted light obtained by irradiating a surface of the electrochromic sheet 100 on the side of the first transparent base material layer 1 (support layer) with light from a D65 light source at an incidence angle of 90° is 70% to 99% in a case where the transmitted light is measured at a viewing angle of 10° using a spectrophotometer.

In Condition 3, the transmittance is 70% to 99%, preferably 75% to 99%, and more preferably 80% to 99%.

In addition, a reflectivity of reflected light obtained by irradiating a surface of the electrochromic sheet 100 on the side of the first transparent base material layer 1 (support layer) with light from a D65 light source at an incidence angle of 90° is preferably 5% to 15%, and more preferably 8% to 12% in a case where the reflected light is measured at a viewing angle of 10° using a spectrophotometer.

Furthermore, in the present embodiment, the electrochromic sheet 100 has the first electrochromic layer 3 and the second electrochromic layer 5 laminated on both surfaces of the electrolyte layer 4, and therefore, in the conditions 1 to 3, the reflected light may be measured by irradiating the surface on the side of the second transparent base material layer (support layer) with light at an incidence angle of 90° from a D65 light source.

The electrochromic sheet 100 of the present embodiment is further configured to satisfy the following Condition 4. As a result, the degree of freedom in design of a tint of the electrochromic sheet 100, and the lens and the like using the electrochromic sheet 100 can be improved with high accuracy.

### (Condition 4)

In a case where a test piece (having a maximum length of equal to or more than 20 mm) in which the electrolyte layer 4 is located at a central part and the sealing member 8 is located at an outer edge is manufactured using the electrochromic sheet 100, the test piece is chucked at both ends by a chucking part, the central part of the test piece is pressed at 30 N for 30 seconds, and a difference in depth between the central part of the test piece before being pressed and the central part of the test piece after being pressed is defined as a deformation amount (mm), the deformation amount is 0.01 mm to 0.09 mm.

In Condition 4, the deformation amount is 0.01 mm to 0.09 mm, preferably 0.02 to 0.08 mm, and more preferably 0.03 to 0.07 mm.

As a result, it is possible to improve the mechanical strength while maintaining good processability. More specifically, the deformation or recession of the electrolyte layer 4 can be suppressed even in a case where a load is applied to the electrolyte layer 4, for example, a case of punching-out of the electrochromic sheet 100, a case of deformation into a curved shape, a case of surface processing for forming a prescription lens, a case of chucking in lens cutting processing, and the like.

Furthermore, it is preferable that the electrochromic sheet 100 has no yield point in the measurement of Condition 4. As a result, good processability can be more stably obtained.

In Condition 4, the shape of the test piece is appropriately adjusted according to the shape of the electrolyte layer 4 and the sealing part 8 that covers the side surface of the electrolyte layer 4, but at least the maximum length is equal to or more than 20 mm. In a case where the shape of the test piece is quadrangular, it is preferable that one side is equal to or more than 20 mm and the other side is equal to or more than 30 mm. In addition, the upper limit value of the shape of the test piece is not particularly limited as long as the test piece does not protrude from a stage of a measuring instrument. The central part is a region including a center point of the test piece in a case of being seen in a plan view.

In the present embodiment, the electrochromic sheet 100 satisfying the Conditions 1 to 4 can be appropriately adjusted by those skilled in the art by combining known methods.

For example, the adjustment can be realized by adjusting the constituent materials, the layer constitution, and the thicknesses of the first transparent electrode layer 2 and the second transparent electrode layer 6, the combination of the first transparent electrode layer 2 and the second transparent electrode layer 6, the selection of the material of the sealing member 9, the material and the production procedure of the electrolyte layer 4, the production procedure and the production conditions for the electrochromic sheet 100, and the like. Specific examples thereof include a use of materials other than ITO as a constituent material of the first transparent electrode layer 2 and the second transparent electrode layer 6, and a multilayer structure.

Hereinafter, each configuration of the electrochromic sheet 100 will be described in detail.

### [Transparent Electrode Layer]

In the present embodiment, the first transparent electrode layer 2 and the second transparent electrode layer 6 are a pair of electrode layers that sandwich the first electrochromic layer 3, the electrolyte layer 4, and the second electrochromic layer 5.

The first transparent electrode layer 2 and the second transparent electrode layer 6 are each an electrode that supplies electrons to a gap between the first transparent electrode layer 2 and the second transparent electrode layer 6 or receive electrons from a gap between the first transparent electrode layer 2 and the second transparent electrode layer 6 in a case where a positive voltage or a negative voltage is applied to the first electrochromic layer 3, the electrolyte layer 4, and the second electrochromic layer 5.

The first transparent electrode layer 2 is provided on a surface of the first electrochromic layer 3 on the side opposite to the electrolyte layer 4 side. The second transparent electrode layer 6 is provided on a surface of the second electrochromic layer 5 on the side opposite to the electrolyte layer 4 side.

The first transparent electrode layer 2 and the second transparent electrode layer 6 may be either of a single layer or a multilayer structure in which two or more layers are laminated, and at least one of the transparent electrode layers preferably has the multilayer structure.

In addition, the layer structures of the first transparent electrode layer 2 and the second transparent electrode layer 6 may be the same as or different from each other, or may have a symmetrical structure centered around the electrolyte layer 4.

The average thickness of the first transparent electrode layer 2 and the second transparent electrode layer 6 is adjusted such that an electric resistance value required for the redox reaction of the first electrochromic layer 3 and the second electrochromic layer 5 is obtained and the degree of freedom in design is improved.

The thicknesses of the first transparent electrode layer 2 and the second transparent electrode layer 6 are preferably 40 to 200 nm, more preferably 70 to 175 nm, and still more preferably 100 to 150 nm.

By setting the thicknesses of the first transparent electrode layer 2 and the second transparent electrode layer 6 to be equal to or more than the lower limit value, it is possible to prevent the resistance value from increasing excessively and to maintain the performance as an electrochromic sheet. On the other hand, by setting the thicknesses of the first transparent electrode layer 2 and the second transparent electrode layer 6 to be equal to or less than the upper limit value, it is possible to prevent the transmittance from decreasing excessively and to improve the degree of freedom in design of the appearance. In addition, by keeping the thicknesses of the first transparent electrode layer 2 and the second transparent electrode layer 6 to be in a range within the lower limit value and the upper limit value, it is possible to keep the tint of reflected light transparent and to improve the degree of freedom in design of the lens.

In addition, for example, in a case where ITO is used as constituent materials of the first transparent electrode layer 2 and the second transparent electrode layer 6, the thicknesses thereof are independently preferably set to equal to or more than 50 nm and equal to or less than 200 nm, and more preferably set to equal to or more than 100 nm and equal to or less than 150 nm.

Furthermore, an interlayer such as an insulating porous layer and a protective layer may be provided between the respective layers between the first transparent electrode layer 2 and the second transparent electrode layer 6.

The thicknesses of the first transparent electrode layer 2 and the second transparent electrode layer 6 may be the same as or different from each other. In addition, it is preferable that the thicknesses of the first transparent electrode layer 2 and the second transparent electrode layer 6 are set in accordance with the constituent materials described later.

The constituent materials of the first transparent electrode layer 2 and the second transparent electrode layer 6 are not particularly limited as long as they are transparent conductive materials, and for example, one or a combination of two or more selected from tin-doped indium oxide (ITO), fluorine-doped tin oxide (FTO), antimony-doped tin oxide (ATO), zinc-doped indium oxide (IZO), silver (Ag) and a silver alloy, as well as polypyrrole, polyaniline, polythiophene, poly(p-phenylene), polyfluorene, and derivatives thereof can be used.

The constituent materials of the first transparent electrode layer 2 and the second transparent electrode layer 6 may be the same as or different from each other. Among these, from the viewpoint of improving the degree of freedom in design, it is preferable that in a case where one of the first transparent electrode layer 2 and the second transparent electrode layer 6 includes tin-doped indium oxide (ITO), the other layer does not include tin-doped indium oxide (ITO), and it is more preferable that both layers include tin-doped indium oxide (ITO).

Specifically, the first transparent electrode layer 2 and the second transparent electrode layer 6 preferably have a single-layer or multilayer structure including a layer formed of any material selected from tin-doped indium oxide (ITO), fluorine-doped tin oxide (FTO), antimony-doped tin oxide (ATO), zinc-doped indium oxide (IZO), silver (Ag), a silver alloy, and polypyrrole, polyaniline, polythiophene, poly(p-phenylene), polyfluorene, and derivatives thereof. Among these, from the viewpoint of improving the degree of freedom in design, it is preferable that in a case where one of the first transparent electrode layer 2 and the second transparent electrode layer 6 includes a layer consisting of tin-doped indium oxide (ITO), the other layer does not include a layer consisting of tin-doped indium oxide (ITO), it is more preferable that both layers are layers consisting of tin-doped indium oxide (ITO), and it is still more preferable that both layers are layers including two or more of tin-doped indium oxide (ITO).

Examples of the method for manufacturing each of the first transparent electrode layer 2 and the second transparent electrode layer 6 include a vacuum vapor deposition method, a sputtering method, and an ion plating method. In addition, examples thereof include, as a method in which the material of each of the first transparent electrode layer 2 and the second transparent electrode layer 6 can be applied to form the first transparent electrode layer 2 and the second transparent electrode layer 6, various printing methods such as a spin coating method, a casting method, a microgravure coating method, a gravure coating method, a bar coating method, a roll coating method, a wire bar coating method, a dip coating method, a slit coating method, a capillary coating method, a spray coating method, a nozzle coating method, a gravure printing method, a screen printing method, a flexo printing method, an offset printing method, a reverse printing method, and an inkjet printing method.

### [Electrolyte Layer]

The electrolyte layer 4 is an electrolyte layer that is disposed between the first electrochromic layer 3 and the second electrochromic layer 5, and contains an electrolyte having ion conductivity.

The average thickness of the electrolyte layer 4 is not particularly limited, but is preferably set to approximately equal to or more than 20 µm and equal to or less than 100 µm, and more preferably set to approximately equal to or more than 40 µm and equal to or less than 80 µm.

The electrolyte layer 4 includes a binder resin and an electrolyte.

The binder resin is not particularly limited and can be appropriately selected depending on the purpose, but it is preferable that the binder resin includes a urethane resin unit from the viewpoint of the phase separation temperature and the film hardness as a polymerized film. Moreover, by including a polyethylene oxide (PEO) chain, the compatibility with the electrolyte is improved and the phase separation temperature can be increased. In addition, by including a polymethyl methacrylate (PMMA) chain, the compatibility with the electrolyte is improved and the phase separation temperature can be increased, as in the case of including the PEO chain.

The electrolyte is not particularly limited, and examples thereof include inorganic ion salts such as an alkali metal salt and an alkaline earth metal salt, a quaternary ammonium salt, acids, and alkali supporting salts. Specific examples thereof include LiClO₄, LiBF₄, LiAsF₆, LiPF₆, LiCF₃SO₃, LiCF₃COO, KCl, NaClO₃, NaCl, NaBF₄, NaSCN, KBF₄, Mg(ClO₄)₂, and Mg(BF₄)₂. One or a combination of two or more of these can be used.

In addition to these, an ionic liquid can also be used as the material of the electrolyte. Among these ionic liquids, an organic ionic liquid is preferably used since it is easy to handle due to having a molecular structure that exhibits a liquid in a wide temperature range including room temperature.

Examples of the cationic component as a molecular structure of the organic ionic liquid include imidazole derivatives such as an N,N-dimethylimidazolium salt, an N,N-methylethylimidazolium salt, and an N,N-methylpropylimidazolium salt; pyridinium derivatives such as an N,N-dimethylpyridinium salt and an N,N-methylpropylpyridinium salt; and aliphatic quaternary ammonium-based salts such as a trimethylpropylammonium salt, a trimethylhexylammonium salt, and a triethylhexylammonium salt. In addition, in consideration of stability in the atmospheric air, a compound including fluorine is preferably used as the anionic component, and examples thereof include BF₄⁻, CF₃SO₃⁻, PF₄⁻, and (CF₃SO₂)₂N⁻.

Such a material of the electrolyte is preferably an ionic liquid in which a cationic component and an anionic component are randomly combined.

The ionic liquid may be directly dissolved in any of a photopolymerizable monomer, an oligomer, or a liquid crystal material. Furthermore, in a case where the solubility in these materials is poor, after obtaining a solution that is obtained by dissolving a small amount of the ionic liquid in a solvent, the ionic liquid may be dissolved by mixing this solution with any of a photopolymerizable monomer, an oligomer, or a liquid crystal material.

Examples of the solvent include propylene carbonate, acetonitrile, γ-butyrolactone, ethylene carbonate, sulfolane, dioxolane, tetrahydrofuran, 2-methyltetrahydrofuran, dimethyl sulfoxide, 1,2-dimethoxyethane, 1,2-ethoxymethoxyethane, polyethylene glycol, alcohols, and a mixed solvent thereof.

The electrolyte to be filled as the electrolyte layer 4 may be any of a solid and a liquid, but in addition to a case where the electrolyte is a low-viscosity liquid, for example, it is possible to have various forms such as a gel-like form, a polymer crosslinked form, and a liquid crystal dispersed form. Among the above, the electrolyte is preferably formed to have a gel-like form or a solid form. As a result, it is possible to achieve the improvement of the element strength of the electrochromic element 10, the improvement of the reliability thereof, and the like.

As a method for forming the electrolyte layer 4 to have a solid state, for example, a method of holding a liquid containing an electrolyte and a solvent in a binder resin is preferable. As a result, both the high ion conductivity and the high solid strength of the electrolyte layer 4 can be obtained. In addition, the polymer resin is preferably, for example, a photocurable resin. As a result, the electrolyte layer 4 having a solid state can be obtained at a low temperature and in a short time, as compared with a case where the electrolyte layer 4 having a solid state is obtained by thermal polymerization or vaporization of a solvent.

In a case where the electrolyte layer 4 has a gel-like form, it can be manufactured, for example, as follows.

The electrolyte layer can be produced by a polymerization reaction using a casting polymerization method in which a composition solution is first manufactured and the manufactured composition solution is sandwiched between molds or films, and then polymerized. The composition solution can be obtained by mixing an electrolytic solution obtained by mixing the ion liquid or the solid electrolyte with a solvent, a polymerizable material, a urethane acrylate monomer, and as necessary, an acrylate monomer having a PEO chain, and as necessary, an acrylate monomer having a PMMA chain at a desired ratio, and as necessary, the polymerization initiator and other components.

As another manufacturing method, a method in which a composition solution before polymerization is applied onto one electrochromic layer and subjected to polymerization by irradiation with ultraviolet rays or heating can also be used. In addition, it is also possible to use a method in which the supports on which the electrochromic layer has been formed are allowed to face each other in a state of maintaining a gap of equal to or more than 5 µm and equal to or less than 150 µm, filling is carried out with a composition solution, and then the composition solution is subjected to polymerization by irradiation with ultraviolet rays or heating.

### [Electrochromic Layer]

The first electrochromic layer 3 and the second electrochromic layer 5 are layers including an electrochromic material, and are disposed to sandwich the electrolyte layer 4 from the upper and lower surfaces of the electrolyte layer 4.

Hereinafter, a case where the second electrochromic layer 5 includes the metal nanoparticles and the electrochromic material will be described, but although the redox actions are different from each other, other configurations, effects, and the like are the same even in a case where the first electrochromic layer 3 includes the metal nanoparticles and the electrochromic material.

### (Metal Nanoparticles)

The metal nanoparticles have excellent conductivity and can make the electrochromic material electrically energized.

The metal nanoparticles may be metal particles having conductivity, and specific examples thereof include one or two or more selected from tin oxide, titanium oxide, zinc oxide, antimony (V) oxide, zirconium oxide, and yttrium oxide. Among these, tin oxide or titanium oxide is preferable.

The average primary particle diameter of the metal nanoparticles (hereinafter also referred to as a "particle diameter") is preferably 1 nm to 100 nm, and more preferably 3 to 8 nm.

In a case where the particle diameter is set to be equal to or more than the lower limit value, good color activation and deactivation performance can be obtained. On the other hand, in a case where the particle diameter is set to be equal to or less than the upper limit value, the amount of the supported electrochromic material can be increased by maintaining the transparency of the second electrochromic layer 5 or increasing the specific surface area.

The electrochromic material supported by the metal nanoparticles may be one kind or two or more kinds of compounds.

Furthermore, the second electrochromic layer 5 is preferably formed from a sol solution of the metal nanoparticles. As a result, a good haze value can be obtained or the reflectivity can be increased.

### (Electrochromic Material)

The electrochromic material is composed of an electrochromic compound that causes a redox reaction by a voltage, thereby being capable of reversibly carrying out color development and decoloration.

The electrochromic material may be any of an inorganic electrochromic compound or an organic electrochromic compound, and a publicly known electrochromic compound such as a coloring agent-based electrochromic compound, a polymer-based electrochromic compound, a metal complex-based electrochromic compound, or a metal oxide-based electrochromic compound can be used.

The electrochromic material may be any of an inorganic electrochromic compound or an organic electrochromic compound. In addition, a conductive polymer that is known to exhibit electrochromism may be used.

An electrochromic material can be appropriately selected from these electrochromic materials for the first electrochromic layer 3 and the second electrochromic layer 5, but in a case where one of the first electrochromic layer 3 and the second electrochromic layer 5 uses an electrochromic material having oxidative color developability, the other thereof preferably uses an electrochromic material having reductive color developability.

The electrochromic material having oxidative color developability is preferably a polymerized substance obtained by polymerizing an electrochromic composition that has oxidative color developability and contains a radically polymerizable compound, and it is particularly preferably an electrochromic composition that contains a radically polymerizable compound having a triarylamine.

The length of a single molecule of the electrochromic material is preferably equal to or less than 5 nm.

### (First Electrochromic Layer)

The first electrochromic layer 3 includes an electrochromic material that exhibits coloration by an oxidation reaction as a main material, whereby the layer undergoes coloration.

The average thickness of the first electrochromic layer 3 is not particularly limited, but is preferably approximately equal to or more than 0.1 µm and equal to or less than about 30 µm, and more preferably approximately equal to or more than 0.4 µm and equal to or less than 10 µm.

The electrochromic material that is included as a main material in the first electrochromic layer 3 and exhibits coloration by an oxidation reaction is not particularly limited, and examples thereof include a polymerized substance obtained by polymerizing a composition including a radically polymerizable compound having a triarylamine, a bisacridan compound, a Prussian blue-type complex, and nickel oxide. One or a combination of two or more of these can be used.

Examples of the polymerized substance obtained by polymerizing a composition including a radically polymerizable compound having a triarylamine include those described in Japanese Unexamined Patent Publication No. 2022-25243, Japanese Unexamined Patent Publication No. 2016-45464, Japanese Unexamined Patent Publication No. 2020-138925, and the like.

In addition, examples of the Prussian blue-type complex include a material consisting of Fe (III)₄[Fe (II)(CN)₆]₃.

Among those, in particular, a polymerized substance obtained by polymerizing a composition including a radically polymerizable compound having a triarylamine is preferably used from the viewpoint that an electrochromic element that is capable of operating at a constant voltage, has excellent repetitive durability, and has high contrast can be obtained.

Furthermore, the composition including a radically polymerizable compound having a triarylamine may contain another radically polymerizable compound different from the radically polymerizable compound having a triarylamine, and a polymerized substance obtained by polymerizing such a composition may be composed of a crosslinked substance in which these radically polymerizable compounds are crosslinked.

### (Second Electrochromic Layer)

The second electrochromic layer 5 is a layer that includes, as a main material, an electrochromic material that exhibits coloration from transparency by a reduction reaction, whereby the layer undergoes coloration.

The average thickness of the second electrochromic layer 5 is not particularly limited, but is preferably approximately equal to or more than 0.2 µm and equal to or less than 5.0 µm, and more preferably approximately equal to or more than 1.0 µm and equal to or less than 4.0 µm. In a case where the average thickness is less than 0.2 µm, there is a concern that a color optical density may be hardly obtained depending on the kind of the electrochromic material, and in a case where the average thickness is more than 5.0 µm, the manufacturing cost increases, and there is a concern that the visibility may deteriorate due to coloration depending on the kind of the electrochromic material.

It is preferable that an electrochromic material having the same color tone as the first electrochromic layer 3 is used for the second electrochromic layer 5. This makes it possible to improve the maximum color optical density, and as a result, it is possible to improve the contrast.

In addition, in response to this, using materials with different color tones allows for color mixing. In addition, the driving voltage in the electrochromic layer 3, the electrolyte layer 4, and the second electrochromic layer 5 can be effectively reduced by carrying out coloration through the oxidation reaction and the reduction reaction on the sides of both electrodes of the first transparent electrode layer 2 and the second transparent electrode layer 6, and thus, the improvement of the repetitive durability of the electrochromic sheet 100 can be achieved.

The electrochromic material that is included as a main material in the second electrochromic layer 5 and exhibits coloration by a reduction reaction is not particularly limited, and examples thereof include an inorganic electrochromic compound, an organic electrochromic compound, and a conductive polymer. One or a combination of two or more of these can be used.

Examples of the inorganic electrochromic compound include tungsten oxide, molybdenum oxide, iridium oxide, and titanium oxide, and among these, tungsten oxide is preferable. Tungsten oxide is preferably used since
it has a low color activation and deactivation potential due to a low reduction potential thereof, and further, as an inorganic material, it has excellent durability.

In addition, examples of the organic electrochromic compound include low-molecular-weight organic electrochromic compounds such as an azobenzene-based compound, an anthraquinone-based compound, a diarylethene-based compound, a dihydropyrene-based compound, a dipyridine-based compound, a styryl-based compound, a styryl spiropyran-based compound, a spirooxazine-based compound, a spirothiopyran-based compound, a thioindigo-based compound, a tetrathiafulvalene-based compound, a terephthalic acid-based compound, a triphenylmethane-based compound, a triphenylamine-based compound, a naphthopyran-based compound, a viologen-based compound, a pyrazoline-based compound, a phenazine-based compound, a phenylene diamine-based compound, a phenoxazine-based compound, a phenothiazine-based compound, a phthalocyanine-based compound, a fluoran-based compound, a fulgide-based compound, a benzopyran-based compound, and a metallocene-based compound. Among these, the viologen-based compound or the dipyridine-based compound is preferable. These compounds are preferably used since they have a low color activation and deactivation potential and exhibit a good color value.

Examples of the viologen-based compound include those described in Japanese Unexamined Patent Publication No. 2022-025243, Japanese Patent No. 3955641, Japanese Unexamined Patent Publication No. 2007-171781, and the like. In addition, examples of the dipyridine-based compound include those described in Japanese Unexamined Patent Publication No. 2007-171781, Japanese Unexamined Patent Publication No. 2008-116718, and the like.

Examples of the conductive polymer include polypyrrole, polythiophene, polyaniline, and derivatives thereof.

### [Transparent Base Material Layer (Support Layer)]

The first transparent base material layer 1 and the second transparent base material layer 7 have a function of supporting the first transparent electrode layer 2, the first electrochromic layer 3, the electrolyte layer 4, the second electrochromic layer 5, the second transparent electrode layer 6, and the sealing member 8.

In addition, the first transparent base material layer 1 and the second transparent base material layer 7 constitute the outermost layer of the electrochromic sheet 100. That is, at least the first electrochromic layer 3, the electrolyte layer 4, and the second electrochromic layer 5 are not exposed to the outside. Therefore, the first electrochromic layer 3, the electrolyte layer 4, and the second electrochromic layer 5 can be protected from moisture, oxygen gas, physical impact, friction, and the like from the outside.

The first transparent base material layer 1 and the second transparent base material layer 7 are not particularly limited as long as they are composed of a resin material having transparency as a main material, but it is preferable that they contain a transparent resin (base resin) having thermoplasticity as a main material.

The transparent resin is not particularly limited, and examples thereof include one or two or more selected from an episulfide-based resin, a thiourethane-based resin, an acrylic resin, a polycarbonate-based resin, a urethane-based resin, a polyamide-based resin, a polyester-based resin, a cellulose-based resin, a cycloolefin polymer (COP), a cycloolefin copolymer (COC), a norbornene-based resin, and a silicone-based resin.

Among these, the polycarbonate-based resin or the polyamide-based resin is preferable, and the polycarbonate-based resin is particularly preferable. The polycarbonate-based resin has high transparency (light-transmitting property) and high mechanical strength such as rigidity, and further has high heat resistance. Therefore, the transparency, the impact resistance, and the heat resistance of the first transparent base material layer 1 and the second transparent base material layer 7 can be improved by using the polycarbonate-based resin for the transparent resin.

As the polycarbonate-based resin, various resins can be used, but among those described above, the aromatic polycarbonate-based resin is preferable. The aromatic polycarbonate-based resin has an aromatic ring in the main chain thereof, which makes it possible to obtain the first transparent base material layer 1 and the second transparent base material layer 7 which have more excellent strength.

This aromatic polycarbonate-based resin is synthesized, for example, by an interfacial polycondensation reaction between bisphenol and phosgene, an ester exchange reaction between bisphenol and diphenyl carbonate, or the like.

Examples of the bisphenol include bisphenol A and a bisphenol (modified bisphenol) which is the origin of a repeating unit of a polycarbonate represented by Formula (1A).

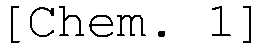

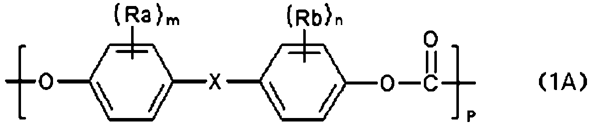

(In Formula (1A), X is an alkyl group having 1 to 18 carbon atoms, an aromatic group, or a cyclic aliphatic group, Ra and Rb are each independently an alkyl group having 1 to 12 carbon atoms, m and n are each an integer of 0 to 4, and p is the number of repeating units.)

Furthermore, specific examples of the bisphenol that is the origin of the repeating unit of the polycarbonate represented by Formula (1A) include 4,4'-(pentane-2,2-diyl)diphenol, 4,4'-(pentane-3,3-diyl)diphenol, 4,4'-(butane-2,2-diyl)diphenol, 1,1'-(cyclohexanediyl)diphenol, 2-cyclohexyl-1,4-bis(4-hydroxyphenyl)benzene, 2,3-biscyclohexyl-1,4-bis(4-hydroxyphenyl)benzene, 1,1'-bis(4-hydroxy-3-methylphenyl)cyclohexane, and 2,2'-bis(4-hydroxy-3-methylphenyl)propane. One or a combination of two or more of these can be used.

Among these, as the polycarbonate-based resin, a bisphenol-type polycarbonate-based resin having a skeleton derived from bisphenol is preferably used as a main component. By using such a bisphenol polycarbonate-based resin, the first transparent base material layer 1 and the second transparent base material layer 7 exhibit more excellent strength.

In the present embodiment, the absorbance of the second transparent base material layer 7 at a wavelength of 320 nm is preferably equal to or less than 1, and more preferably equal to or less than 0.8.

The absorbance of the second transparent base material layer 7 at a wavelength of 295 nm is preferably equal to or less than 1, and more preferably equal to or less than 0.8.

In addition, in the present embodiment, the second transparent base material layer 7 may not include an ultraviolet absorber. In this case, in eyewear or the like using the electrochromic sheet 100 of the present embodiment, it is possible to impart an ultraviolet cut function.

On the other hand, in the present embodiment, the first transparent base material layer 1 may include a known ultraviolet absorber.

### · Coloring Agent

The first transparent base material layer 1 and the second transparent base material layer 7 may further include a coloring agent as long as they have light transmittance, and the color thereof may be any color such as colorless, red, blue, and yellow.

The selection of these colors can be made by allowing the first transparent base material layer 1 and the second transparent base material layer 7 to contain a coloring agent such as a dye and a pigment.

Examples of the dye include an acidic dye, a direct dye, a reactive dye, and a basic dye, and one or a combination of two or more selected from these dyes can be used.

Specific examples of the dye include C. I. Acid Yellow 17, 23, 42, 44, 79, and 142, C. I. Acid Red 52, 80, 82, 249, 254, and 289, C. I. Acid Blue 9, 45, and 249, C. I. Acid Black 1, 2, 24, and 94, C. I. Food Black 1 and 2, C. I. Direct Yellow 1, 12, 24, 33, 50, 55, 58, 86, 132, 142, 144, and 173, C. I. Direct Red 1, 4, 9, 80, 81, 225, and 227, C. I. Direct Blue 1, 2, 15, 71, 86, 87, 98, 165, 199, and 202, C. I. Direct Black 19, 38, 51, 71, 154, 168, 171, and 195, C. I. Reactive Red 14, 32, 55, 79, and 249, and C. I. Reactive Black 3, 4, and 35.

The first transparent base material layer 1 and the second transparent base material layer 7 may further contain various additives such as an antioxidant, a filler, a plasticizer, a light stabilizer, an ultraviolet absorber, a heat ray absorber, and a flame retardant, in addition to the transparent resin, the dye, or the pigment described above, as necessary.

In addition, the first transparent base material layer 1 and the second transparent base material layer 7 may be stretched layers or may be unstretched layers.

Furthermore, the refractive index of each of the first transparent base material layer 1 and the second transparent base material layer 7 at a wavelength of 589 nm is preferably equal to or more than 1.3 and equal to or less than 1.8, and more preferably equal to or more than 1.4 and equal to or less than 1.65. In a case of setting the refractive index n1 of each of the first transparent base material layer 1 and the second transparent base material layer 7 to be in the above-described numerical value ranges, the color activation and deactivation function of the electrochromic sheet 100 is easily recognized visually.

The average thickness of each of the first transparent base material layer 1 and the second transparent base material layer 7 is preferably set to equal to or more than 0.1 mm and equal to or less than 10.0 mm, and more preferably set to equal to or more than 0.3 mm and equal to or less than 5.0 mm.

In a case where the average thicknesses of each of the first transparent base material layer 1 and the second transparent base material layer 7 are set within such a range as described above, it is possible to precisely suppress or prevent the bending of the electrochromic sheet 100 while achieving thinning of the electrochromic sheet 100.

The first transparent base material layer and the second transparent base material layer 7 may be formed of the same constituent material or may be formed of constituent materials different from each other. In addition, both of the films may be stretched films, or only one of the films may be an unstretched film.

The first transparent base material layer and the second transparent base material layer 7 may have the same refractive index or may have different refractive indices. In addition, the first transparent base material layer and the second transparent base material layer 7 may have the same thickness or may have different thicknesses.

### [Sealing Member]

The sealing member 8 is used in order to integrally cover the side surface of the electrolyte layer 4 and the side surfaces of the first electrochromic layer 3 and the second electrochromic layer 5, in order to prevent the infiltration of moisture or oxygen gas into the electrochromic element 10 from the outside, and in order to allow the electrochromic element 10 to adhere to the first transparent base material layer 1 and the second transparent base material layer 7 and to prevent the first transparent base material layer 1 and the second transparent base material layer 7 from being peeled off from the electrochromic element 10. In addition, displacement of positions of the first electrochromic layer 3 and the second electrochromic layer 5 formed between the opposing first transparent electrode layer 2 and second transparent electrode layer 6 causes deterioration of the quality of color development during operation, and the sealing material 8 is used to suppress such deterioration.

The average thickness (the length in the lamination direction) of the sealing member 8 is adjusted according to the average thickness of the electrochromic element 10, but for example, it is preferably set to approximately equal to or more than 20 µm and equal to or less than 100 µm, and more preferably set to approximately equal to or more than 40 µm and equal to or less than 80 µm.

The sealing member 8 is formed of a sealing material described later.

### (Sealing Material)

The sealing material of the present embodiment is not particularly limited as long as it is an insulating material, but the sealing material preferably includes a curable resin.

### · Curable Resin

Examples of the curable resin include one or two or more selected from an epoxy resin, an acrylic resin, a phenol resin, a maleimide resin, a silicone resin, a urethane resin, a cyanate resin, a melamine resin, a urea resin, and an unsaturated polyester resin. The curable resin is preferably a curable resin having at least one of an ultraviolet reactive functional group or a thermal reactive functional group, and more preferably a curable resin having a (meth)acryloyl group and/or an epoxy group. Examples of the curable resin include thermosetting resins such as (meth)acrylate and an epoxy resin.

The (meth)acrylate is not particularly limited, and examples thereof include urethane (meth)acrylate having a urethane bond, and epoxy (meth)acrylate derived from a compound having a glycidyl group and (meth)acrylic acid.

The urethane (meth)acrylate is not particularly limited, and examples thereof include derivatives derived from diisocyanates such as isophorone diisocyanate, and reactive compounds that undergo an addition reaction with isocyanates such as acrylic acid and hydroxyethyl acrylate. These derivatives may be chain-elongated with caprolactone, polyol, or the like.

The epoxy (meth)acrylate is not particularly limited, and examples thereof include those obtained by reacting an epoxy compound with (meth)acrylic acid in the presence of a basic catalyst according to a conventional method. Examples thereof include epoxy (meth)acrylate derived from an epoxy resin such as a bisphenol A-type epoxy resin or propylene glycol diglycidyl ether, and (meth)acrylic acid.

Examples of the other (meth)acrylates include one or two or more selected from methyl methacrylate, tetrahydrofurfuryl methacrylate, benzyl methacrylate, isobornyl methacrylate, 2-hydroxyethyl methacrylate, glycidyl methacrylate, (poly)ethylene glycol dimethacrylate, 1,4-butanediol dimethacrylate, 1,6-hexanediol dimethacrylate, trimethylolpropane triacrylate, pentaerythritol triacrylate, glycerin dimethacrylate, and the like.

Examples of the epoxy resin include one or two or more selected from epoxy resins such as a novolac-type epoxy resin such as a phenol novolac-type epoxy resin or a cresol novolac-type epoxy resin, a bisphenol-type epoxy resin such as a bisphenol A-type epoxy resin or a bisphenol F-type epoxy resin, an aromatic glycidylamine-type epoxy resin such as N,N-diglycidylaniline, N,N-diglycidyltoluidine, a diaminodiphenylmethane-type glycidylamine, or an aminophenol-type glycidylamine, a hydroquinone-type epoxy resin, a biphenyl-type epoxy resin, a stilbene-type epoxy resin, a triphenolmethane-type epoxy resin, a triphenolpropane-type epoxy resin, an alkyl-modified triphenolmethane-type epoxy resin, a triazine nucleus-containing epoxy resin, a dicyclopentadiene-modified phenol-type epoxy resin, a naphthol-type epoxy resin, a naphthalene-type epoxy resin, and an aralkyl-type epoxy resin such as a phenol aralkyl-type epoxy resin having a phenylene and/or biphenylene skeleton or a naphthol aralkyl-type epoxy resin having a phenylene and/or biphenylene skeleton, and aliphatic epoxy resins such as an alicyclic epoxy such as vinylcyclohexene dioxide, dicyclopentadiene oxide, and an alicyclic diepoxy adipate, and the like.

The sealing material of the present embodiment may further include inorganic particles.

### · Inorganic Particles

Examples of the inorganic particles include one or two or more selected from silica, talc, glass beads, asbestos, gypsum, diatomite, smectite, bentonite, montmorillonite, sericite, activated clay, alumina, zinc oxide, iron oxide, magnesium oxide, tin oxide, titanium oxide, calcium carbonate, magnesium carbonate, magnesium hydroxide, aluminum hydroxide, aluminum nitride, silicon nitride, barium sulfate, calcium silicate, and the like.

The inorganic particles may be inorganic particles that have been subjected to a hydrophobic treatment on a surface thereof. The inorganic particles can be subjected to a surface treatment according to a publicly known method, for example, by using epoxysilane, aminosilane, (meth)acrylic silane, vinylsilane, methylchlorosilane, dimethylpolysiloxane, or the like. As the inorganic particles, those that have been subjected to a hydrophobic treatment and those that have not been subjected to a hydrophobic treatment may be mixed and used.

The content of the inorganic particles is 1% to 80% by mass, preferably 3% to 70% by mass, and more preferably 20% to 60% by mass with respect to the total amount of the sealing material.

### · Others

The sealing material of the present embodiment may include organic particles, a polymerization initiator, a thermosetting agent, and the like, in addition to the curable resin and the inorganic particles.

Examples of the organic particle include one or two or more selected from a polyester fine particle, a polyurethane fine particle, a vinyl polymer fine particle, an acrylic polymer fine particle, a silicone fine particle, a core-shell type rubber fine particle, and the like.

Examples of the polymerization initiator include a radical polymerization initiator and a cationic polymerization initiator.

Examples of the radical polymerization initiator include a photoradical polymerization initiator that generates a radical upon irradiation with light, and a thermal radical polymerization initiator that generates a radical upon heating.

Examples of the photoradical polymerization initiator include a benzophenone-based compound, an acetophenone-based compound, an acylphosphine oxide-based compound, a titanocene-based compound, an oxime ester-based compound, a benzoin ether-based compound, and thioxanthone.

Examples of the thermal radical polymerization initiator include those consisting of an azo compound, an organic peroxide, and the like. Among those described above, a polymeric azo initiator consisting of a polymeric azo compound is preferable.

As the cationic polymerization initiator, a photocationic polymerization initiator can be suitably used.

The photocationic polymerization initiator is not particularly limited as long as it generates a protonic acid or a Lewis acid upon irradiation with light. The photocationic polymerization initiator may belong to an ionic photoacid generating type or may belong to a non-ionic photoacid generating type.

Examples of the photocationic polymerization initiator include onium salts such as an aromatic diazonium salt, an aromatic halonium salt, and an aromatic sulfonium salt, and organometallic complexes such as an iron-allene complex, a titanocene complex, and an arylsilanol-aluminum complex.

The content of the polymerization initiator is preferably 0.1 to 30 parts by weight, and more preferably 1 to 10 parts by weight with respect to 100 parts by weight of the curable resin.

In a case where the content of the polymerization initiator is equal to or larger than the lower limit value, the sealing material has more excellent curing properties. On the other hand, in a case where the content of the polymerization initiator is equal to or lower than the upper limit value, the sealing material has more excellent storage stability.

The thermosetting agent is a thermosetting agent for allowing the thermal reactive functional group in the curable resin to undergo a reaction by heating, thereby crosslinking the thermal reactive functional group, and it has a role of improving the adhesiveness and moisture resistance of the curable resin composition after curing.

Examples of the thermosetting agent include an organic acid hydrazide, an imidazole derivative, an amine compound, a polyvalent phenol-based compound, and an acid anhydride. Among those described above, a solid organic acid hydrazide is suitably used.

The content of the above-described thermosetting agent is preferably 0.1 to 50 parts by weight and more preferably 1 to 30 parts by weight with respect to 100 parts by weight of the curable resin.

In a case where the content of the polymerization initiator is equal to or larger than the lower limit value, the sealing material has more excellent curing properties. On the other hand, in a case where the content of the polymerization initiator is equal to or lower than the upper limit value, the coating property of the sealing material is more excellent.

In addition, additives such as a silane coupling agent, a light shielding agent, a reactive diluent, a spacer, a curing accelerator, an anti-foaming agent, a leveling agent, a polymerization inhibitor, and another coupling agent may be contained as necessary.

### (Production Method for Sealing Material)

Examples of a method for producing the sealing material of the present embodiment include a method of mixing, by using a mixer, a curable resin, and as components to be added as necessary, inorganic particles, additives such as a polymerization initiator and/or a thermosetting agent and a silane coupling agent.

Examples of the mixer include a homogenization disperser, a homogenization mixer, a universal mixer, a planetary mixer, a kneader, a three-roll roller, and a rotation and revolution type mixer.

### [Columnar Conductive Part]

The first columnar conductive part 22 is provided as a wiring line so that it overlaps with the first transparent electrode layer 2 provided to be stretched from the electrochromic element 10 as seen in a plan view and penetrates the sealing member 8 (see FIG. 1). Then, the first columnar conductive part 22 is electrically connected to the first transparent electrode layer 2 through the first auxiliary electrode layer 21.

The first columnar conductive part 22 is exposed at an end part of an eyeglass lens in a case where the electrochromic sheet 100 is processed to have an eyeglass lens shape in order to apply the electrochromic sheet 100 to the eyeglass lens. As a result, the electrochromic element 10 can be electrically energized from the outside through the first columnar conductive part 22.

The second columnar conductive part 62 is also exposed at an end part of the eyeglass lens in a case where the electrochromic sheet 100 is processed to have an eyeglass lens shape in order to apply the electrochromic sheet 100 to the eyeglass lens, as in the first columnar conductive part 22. As a result, the electrochromic element 10 can be electrically energized from the outside through the second columnar conductive part 62.

In this case, the first columnar conductive part 22 can be positioned on the bridge side of the eyeglass lens, and the second columnar conductive part 62 can be positioned on the temple side (the side opposite to the bridge side) of the eyeglass lens.

In addition, the first columnar conductive part 22 and the second columnar conductive part 62 each independently have an average thickness that is preferably set to approximately equal to or more than 10 µm and equal to or less than 100 µm, more preferably set to equal to or more than 20 µm and equal to or less than 80 µm, and still more preferably set to approximately equal to or more than 30 µm and equal to or less than 70 µm.

The constituent materials of the first columnar conductive part 22 and the second columnar conductive part 62 may be any conductive paste having conductivity. As a result, the adhesiveness between the first columnar conductive part 22 and the sealing member 8, and the adhesiveness between the second columnar conductive part 62 and the sealing member 8 can be enhanced.

### (Other Electrodes)

The first auxiliary electrode layer 21 is provided to be laminated, as a wiring line, on a surface of the first transparent electrode layer 2 opposite to the first transparent base material layer 1, and is electrically connected to the first columnar conductive part 22.

Similarly, the second auxiliary electrode layer 61 is provided to be laminated, as a wiring line, on a surface of the second transparent electrode layer 6 opposite to the second transparent base material layer 7, and is electrically connected to the second columnar conductive part 62.

The resistance values of the first auxiliary electrode layer 21 and the second auxiliary electrode layer 61 are set to be lower than the resistance values of the first transparent electrode layer 2 and the second transparent electrode layer 6, respectively. Therefore, by constituting the wiring lines that are electrically connected to the electrochromic element 10 in each of the laminate of the first transparent electrode layer 2 and the first auxiliary electrode layer 21 and the laminate of the second transparent electrode layer 6 and the second auxiliary electrode layer 61, it is possible to impart more excellent electrical conductivity to these wiring lines (laminates).

The constituent material of each of the first auxiliary electrode layer 21 and the second auxiliary electrode layer 61 is not particularly limited as long as it has a resistance value lower than the resistance values of the first transparent electrode layer 2 and the second transparent electrode layer 6. However, a constituent material having excellent conductivity is used, and examples thereof include silver, aluminum, copper, chromium, and molybdenum. One or a combination of two or more of these can be used.

In addition, the first auxiliary electrode layer 21 and the second auxiliary electrode layer 61 each independently have an average thickness that is preferably set to approximately equal to or more than 1 nm and equal to or less than 100 nm, and more preferably set to approximately equal to or more than 5 nm and equal to or less than 50 nm. As a result, the function as the auxiliary electrode can be reliably imparted to the first auxiliary electrode layer 21 and the second auxiliary electrode layer 61.

### [Configuration, Thickness, and the Like of Electrochromic Sheet]

The total thickness of the electrochromic sheet 100 of the present embodiment is not particularly limited, but is preferably equal to or more than 0.1 mm and equal to or less than 10.0 mm, and more preferably equal to or more than 0.3 mm and equal to or less than 5.0 mm.

In a case of setting the total thickness of the electrochromic sheet 100 to be equal to or larger than the lower limit value, it is possible to maintain the strength, while in a case of setting the layer thickness to be equal to or less than the upper limit value, it is possible to improve the processability of the cutting, bending, and the like of the electrochromic sheet 100.

Furthermore, each layer provided in the electrochromic sheet 100 may be replaced with a layer having any configuration that makes it possible to exhibit the same function, or another layer may be further provided in the electrochromic sheet 100.

### <Method for Producing Electrochromic Sheet>

The method for producing the electrochromic sheet 100 includes the following steps.

A step of forming a first transparent electrode layer 2 on a first transparent base material layer 1, and laminating a first electrochromic layer 3 on the first transparent electrode layer 2,
a step of forming a second transparent electrode layer 6 on a second transparent base material layer 7, and forming a second electrochromic layer 5 on the second transparent electrode layer 6,
a step of applying a sealing material onto the first transparent electrode layer 2 to surround an outer edge of the first electrochromic layer 3 or applying a sealing material onto the second transparent electrode layer 6 to surround an outer edge of the second electrochromic layer 5,
a step of preparing the electrolyte layer 4 and bonding the first transparent base material layer 1 and the second transparent base material layer 2 to each other such that the first electrochromic layer 3 and the second electrochromic layer 5 face each other with the electrolyte layer 4 interposed therebetween, and
a step of curing the sealing material to form a sealing member 8,
in which in the step of carrying out the bonding, the first electrochromic layer 3 and the second electrochromic layer 5 are covered with a sealing material by pressing and spreading the sealing material.

As a result, the electrochromic sheet 100 can be obtained.

Next, a method for producing the electrochromic lens 300 of the present embodiment using the electrochromic sheet will be described.

It should be noted that the electrochromic sheet used for the electrochromic lens 300 is not limited to a case using the above-described electrochromic sheet 100.

### <Method for Producing Electrochromic Lens>

Hereinafter, each step of a method for producing an electrochromic lens including a curved sheet 120, in which the electrochromic sheet 100 is in a curved shape, will be described in detail as an example.

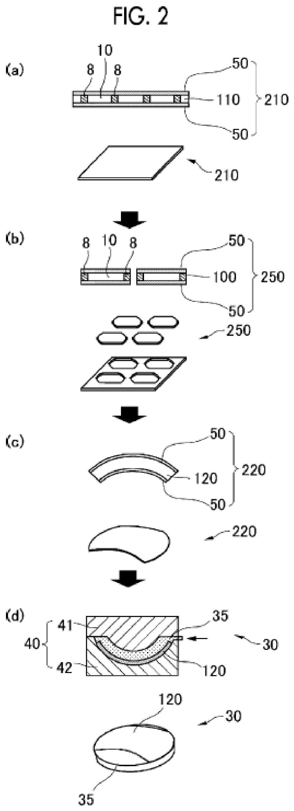

FIG. 2 is a schematic view showing a method for producing a lens using the electrochromic sheet of the present embodiment. The upper side of FIG. 2 will be referred to as "upper", and the lower side of FIG. 2 will be referred to as "lower" in the following description. As shown in FIG. 2, an electrochromic sheet 110 has a plurality of electrochromic elements 10 and sealing members 8 surrounding the plurality of electrochromic elements 10, in other words, has a plurality of electrochromic elements 10 partitioned by the sealing members 8.

### (Step 1)

First, a protective film 50 (masking tape) is attached to both surfaces of the electrochromic sheet 110 to obtain a connecting sheet laminate 210 in which the protective film 50 is attached to both surfaces of the electrochromic sheet 110 (see FIG. 2(a)).

### (Step 2)

Next, as shown in FIG. 2(b), the connecting sheet laminate 210 is punched in the thickness direction to correspond to each electrochromic element 10, thereby obtaining an element laminate 250 in which the connecting sheet laminate 210 is segmented into pieces such that the connecting sheet laminate 210 has a substantially rectangular shape in a plan view. That is, in a state where the protective film 50 is attached to both surfaces, the electrochromic sheet 100 segmented into pieces having a substantially rectangular shape corresponding to each electrochromic element 10 and the sealing member 9 covering the outer edge thereof (see FIG. 1).

As the shape of the segmented electrochromic sheets 100, various shapes such as a rectangular shape, a circular shape, and an elliptical shape can be adopted. The shape to be adopted can be appropriately selected in accordance with the final bare lens 30.

### (Step 3)

Next, as shown in FIG. 2(c), the segmented laminate 250 is subjected to thermal bending processing under heating to form a curved element laminate 220 having a curved shape in which one surface side of the element laminate 250 is a curved concave surface and the other surface side thereof is a curved convex surface. As a result, the electrochromic sheet 100 having a flat plate shape can be formed into a curved sheet 120 having a curved shape in a state where the protective films 50 are attached to both surfaces.

This thermal bending processing is usually carried out by press molding or vacuum molding.

The heating temperature (forming temperature) of the element laminate 250 (electrochromic sheet 100) at this time is preferably set to approximately equal to or higher than 110°C and equal to or lower than 170°C, and more preferably set to approximately equal to or higher than 130°C and equal to or lower than 160°C. In a case of setting the heating temperature within such a range, the electrochromic sheet 100 can be reliably subjected to thermal bending to form the curved sheet 120 having a curved shape while preventing the electrochromic sheet 100 from being modified or deteriorated and allowing the electrochromic sheet 100 to be in a softened or molten state.

### (Step 4)

Next, the protective film 50 is peeled off from the curved sheet 120 that has been subjected to thermal bending. Thereafter, as shown in FIG. 2(d), in a mold 40 including a curved concave surface having a curved shape, with the curved concave surface of the mold 40 and a curved convex surface of a curved sheet 120 being brought into contact with each other so that the curved sheet 120 is held in a suction-adsorbed state, for example, by using an insert injection molding method, a resin layer 35 (molded layer) composed of a resin material as a main material is injection-molded on a curved concave surface of the curved sheet 120. More specifically, the upper mold 41 is attached in a state where the curved sheet 120 is adsorbed to the lower mold 42, and by using, for example, an insert injection molding method, the resin layer 35 composed of a resin material as a main material is molded in the cavity 43 which is a space formed by the lower mold 42 and the upper mold 41.

That is, the constituent material of the resin layer 35 in a molten state is cooled and solidified in a state of being brought into contact with the curved concave surface of the curved sheet 120, whereby the resin layer 35 is molded in a state of being brought into direct contact with the curved concave surface of the curved sheet 120 without interposing an adhesive layer or the like. As a result, a bare lens 30 including the curved sheet 120 which has been subjected to thermal bending and the resin layer 35 is produced.

In a case of subjecting the resin layer 35 to injection molding, the heating temperature (molding temperature) of the constituent material of the resin layer 35 for bringing the resin layer 35 into a molten state is appropriately set in accordance with the type of the constituent material of the resin layer 35. However, in a case where the constituent material of the resin layer 35 is the same as or identical to the constituent material of the transparent base material layer (the first transparent base material layer 1 and the second transparent base material layer 7) provided in the curved sheet 120, the heating temperature is preferably set to approximately equal to or higher than 180°C and equal to or lower than 320°C, and more preferably set to approximately equal to or higher than 230°C and equal to or lower than 300°C. In a case of setting the heating temperature within such a range, the constituent material of the resin layer 35 in the molten state can be reliably supplied to the curved concave surface of the curved sheet 120.

In addition, an injection compression molding method is preferably used among the insert injection molding methods. The injection compression molding method is preferably used since the optical anisotropy due to the molding distortion or the local alignment of the resin molecules during molding is unlikely to occur in the resin layer 35 as a molded body and the bare lens 30, because the injection compression molding method adopts a method of injecting a resin material for forming the resin layer 35 into the metal mold 40 at a low pressure and then closing the metal mold 40 at a high pressure to apply a compressive force to the resin material. In addition, by controlling the metal mold compressive force that is uniformly applied to the resin material, the resin material can be cooled at a constant specific volume, and thus the resin layer 35 having high dimensional accuracy can be obtained.

Then, the edge part of the produced bare lens 30 is subjected to cutting and trimming. As a result, it is possible to obtain an electrochromic lens having a desired shape, in which the sealing member 8 is the outer edge and the electrochromic element 10 is provided inside (FIG. 2).

### <Electrochromic Lens>

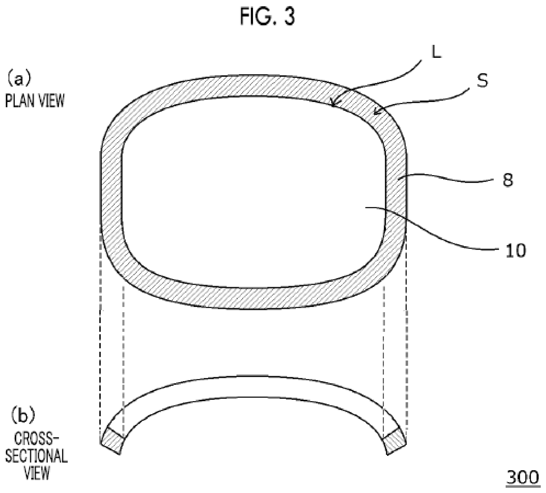

Next, an example of the electrochromic lens will be described with reference to FIG. 3.

An electrochromic lens 300 of the present embodiment may be an electrochromic lens including an electrochromic element 10, a sealing member 8 that covers a side surface of the electrochromic element 10, and a pair of transparent base material layers (a first transparent base material layer 1 and a second transparent base material layer 7) that sandwich the electrochromic element 10 and the sealing member 8; and satisfying the following Requirement a.

(Requirement a) In a case where a length of an edge on an inner peripheral side of the sealing member 8 is taken as L (mm), an area of a region occupied by the sealing member is taken as S (mm²), and S/L is taken as W (mm), which are measured in an orthographic projection in a case of viewing the sealing member 8 through the first transparent base material layer 1 or the transparent base material layer 7 from an upper surface of the electrochromic lens 300,
a first region where W is less than 1 mm and a second region where W is equal to or more than 1.5 mm are present,
in a case where an area of the first region is taken as S1 (mm²) and an area of the second region is taken as S2 (mm²), S1/S (percentage) is equal to or more than 50% and S2/S (percentage) is 1% to 40%, and
in a case where a length of 4 mm at any position of the edge on the inner peripheral side of the sealing member 8 is taken as La, an area of a region occupied by the sealing member 8 including La is taken as Sa (mm²), and Sa/La is taken as Wa (mm), the second region includes a region where Wa (mm) is equal to or more than 1.5 mm.

That is, the electrochromic lens 300 has a region where the width of the sealing member 8 positioned at the outer edge of the electrochromic lens 300 in orthographic projection is equal to or less than 1 mm, and a region where the width of the sealing member 8 is equal to or more than 1.5 mm, at a predetermined ratio. As a result, it is possible to reduce a decrease in the designability of the sealing member 8, which is visually recognized through the first transparent base material layer 1 or the second transparent base material layer 7 in a case where the electrochromic lens 300 is used, while maintaining the moisture and oxygen barrier properties of the sealing member 8. In other words, by having a region where the sealing member 8 has a narrow width and a region where the sealing member 8 has a wide width, the sealing member 8 is difficult to be visually recognized in the region where the width is narrow, and a barrier function of the sealing member 8 can be further exerted in the region where the width is wide, whereby it is easy to maintain the performance while obtaining a good appearance of the entire electrochromic lens 300.

The orthographic projection of the electrochromic lens 300 means an appearance observed in a case where the electrochromic lens 300 is disposed on a horizontal plane such that a convex part is on the upper side in a case where the electrochromic lens 300 is curved as a whole.

In Requirement a, S1/S (percentage) is equal to or more than 50% and S2/S (percentage) is 1% to 40%, and preferably S1/S (percentage) is 70% to 99% and S2/S (percentage) is 1% to 30%.

In Requirement a, W (= S/L) is not particularly limited, but is preferably 0.3 to 10 mm, and more preferably 0.8 to 8.0 mm.

The second region is a region where W is equal to or more than 1.5 mm, but W may be equal to or more than 2.0 mm or may be equal to or more than 3.0 mm.

For example, in a case where the second region is a region where W is 3.0 mm or more, it is preferable that S2/S (percentage) is 1% to 10%.

In addition, it is preferable that the electrochromic lens 300 has a through-electrode (the first columnar conductive part 22 or the second columnar conductive part 62) that penetrates the sealing member 8 in the second region. As a result, it is possible to maintain the color activation and deactivation performance while suppressing a deterioration in appearance of the electrochromic lens 300.

The details of the first columnar conductive part 22 or the second columnar conductive part 62 will be described later, but in a case where the first columnar conductive part 22 or the second columnar conductive part 62 is processed to have a shape of a lens, it is positioned to be exposed at an end part of the eyeglass lens. Specific examples thereof include a bridge side of the eyeglass lens or a temple side of the eyeglass lens (a side opposite to the bridge side). That is, it is preferable that the second region be located near a connection part between the eyeglass lens and the bridge, or near a connection part between the eyeglass lens and the temple.

In addition, it is preferable that the electrochromic lens 300 has a grip part in the second region. The grip part is intended to be a groove part or a convex part used at a time of fitting the electrochromic lens 300 into the frame for eyewear, or to be a groove part or a convex part for holding the electrochromic lens 300 before the electrochromic lens 300 is attached to the frame for eyewear. For example, the electrochromic lens 300 may be attached to the frame for eyewear by providing a hole part in the upper part of the frame and fitting a protruding grip part into the hole part, or may be attachable and detachable.

In addition, the number of grip parts on the electrochromic lens 300 may be 1 or equal to or more than 2, and from the viewpoint of maintaining a balance while obtaining good designability, it is preferable that the number of grip parts is equal to or more than 2 and the grip parts are disposed at positions that are line-symmetrical in the electrochromic lens 300.

It is preferable that the electrochromic lens 300 has the second region or the grip part in the direction of 1 and 3 o'clock and the direction of 9 to 11 o'clock, as viewed from the center of the electrochromic lens 300. Furthermore, the direction of 12 o'clock is an upward direction in a case where the electrochromic lens 300 is oriented in a vertical direction during use.

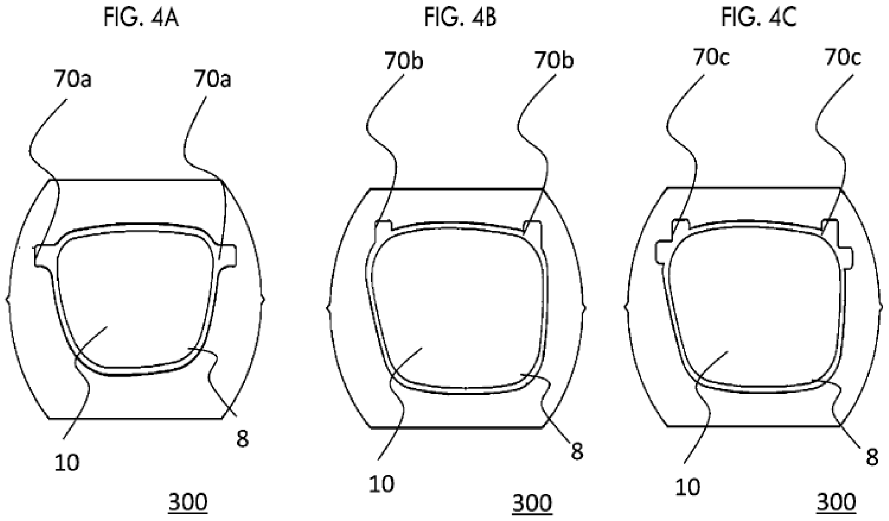

Specifically, FIG. 4 shows an example in which a grip part is provided in the electrochromic lens 300 of the present embodiment. FIG. 4A shows an example in which a grip part 70a is provided in the direction of 2 o'clock and the direction of 10 o'clock as viewed from the center of the electrochromic lens 300. FIG. 4B shows an example in which a pair of grip parts 70b are provided on the upper side of the electrochromic lens 300 in the direction of 1 o'clock and the direction of 11 o'clock as viewed from the center of the electrochromic lens 300. FIG. 4C shows an example in which a pair of grip parts 70c are provided at the upper side corner part of the electrochromic lens 300 in the direction of 2 o'clock and the direction of 10 o'clock as seen from the center of the electrochromic lens 300.

The shape of the electrochromic lens 300 in a plan view is not particularly limited, and a known shape can be adopted. Examples thereof include Boston (a rounded inverted triangle shape), Wellington (an inverted trapezoid in which the upper side is longer than the lower side), oval (egg-shaped), square (substantially a quadrilateral), and round (circular).

The electrochromic lens 300 satisfying Requirement a can be realized by devising the selection of the sealing material constituting the sealing member or the method for producing an electrochromic sheet, or by devising the method for trimming the bare lens, and the like.

### <Method for Using Electrochromic Sheet>

Next, an example of a method for using the electrochromic sheet will be described.

A method for using the electrochromic sheet 100 of the present embodiment is
a method for using an electrochromic sheet 100 that includes an electrochromic element 10, a sealing member 8 that covers a side surface of the electrochromic element 10, and a pair of transparent base material layers that sandwich the electrochromic element 10 and the sealing member 8,
in which the method may include a step of processing the electrochromic sheet 100 to obtain an electrochromic lens 300 satisfying the following Requirement b.

(Requirement b) In a case where a length of an edge on an inner peripheral side of the sealing member 8 is taken as L (mm), an area of a region occupied by the sealing member is taken as S (mm²), and S/L is taken as W (mm), which are measured in an orthographic projection in a case of viewing the sealing member 8 through the first transparent base material layer 1 or the transparent base material layer 7 from an upper surface of the electrochromic lens 300,
a first region where W is less than 1 mm and a second region where W is equal to or more than 1.5 mm are present,
in a case where an area of the first region is taken as S1 (mm²) and an area of the second region is taken as S2 (mm²), S1/S (percentage) is equal to or more than 50% and S2/S (percentage) is 1% to 40%, and
in a case where a length of 4 mm at any position of the edge on the inner peripheral side of the sealing member 8 is taken as La, an area of a region occupied by the sealing member 8 including La is taken as Sa (mm²), and Sa/La is taken as Wa (mm), the second region includes a region where Wa (mm) is equal to or more than 1.5 mm.

A step of processing the electrochromic lens 300 can be performed using a known method, but for example, the processing is performed by punching out the electrochromic sheet 110 including the electrochromic element 10 partitioned by the sealing member 9 into a desired shape, or by further trimming the outer edge of the bare lens 30 including the electrochromic element 10 punched out in the desired shape and having the sealing member 9 on the outer edge.

Requirement b can be set and controlled in the same manner as Requirement a.

According to the method for using the electrochromic sheet 100 of the present embodiment, it is possible to obtain the electrochromic lens 300 in which the color activation and deactivation performance is maintained while obtaining a good appearance.

### <Electrochromic Device>

An electrochromic device of the present embodiment has at least one of the electrochromic sheet and the electrochromic lens, and further has another unit as necessary.

Such another unit is not particularly limited and can be appropriately selected according to the use application. Examples thereof include a power source, a fixing unit, and a control unit.

Specific examples of the electrochromic device include eyewear, photochromic glasses, smart glasses, binoculars, opera glasses, bicycle goggles, watches, electronic paper, electronic albums, electronic advertisement boards, and anti-glare mirrors for automobiles.

Hereinabove, the embodiments of the present invention have been described with reference to the drawings. However, the embodiments are merely examples of the present invention, and various configurations other than the above configurations can also be adopted.

### Examples

Hereinafter, the present invention will be described in detail with reference to examples. However, the content of the present invention is not limited to Examples.

### (1) Preparation of Sealing Material

The following sealing materials were prepared.

### · Sealing material 1: Epoxyacrylate resin ("PHOTOREC S-WF17", manufactured by Sekisui Material Solutions Co., Ltd.), not subjected to heating treatment

### (2) Manufacture of Electrochromic Sheet

### <Example 1>

Such an electrochromic sheet as shown in FIG. 1 was manufactured according to the following procedure.

### - Formation of First Transparent Electrode Layer -

A polycarbonate resin substrate (POLYCA ACE, deflection temperature under loading: 140°C, manufactured by Sumitomo Bakelite Co., Ltd.) having a thickness of 0.5 mm was prepared as the first support.

An ITO film was formed on the first support to a thickness of about 50 nm by a sputtering method, a silver alloy was laminated thereon to a thickness of 5 nm, and an ITO film was laminated thereon to a thickness of 50 nm to obtain a multilayer (IAI), thereby forming a first transparent electrode layer.

Separately, 3 g of titanium oxide (manufactured by Ishihara Sangyo Kaisha, Ltd., ST-21), 0.2 g of acetylacetone, and 0.3 g of a surfactant (manufactured by FUJIFILM Wako Pure Chemical Corporation, polyoxyethylene octylphenyl ether) were subjected to a beads mill treatment together with 5.5 g of water and 1.0 g of ethanol for 12 hours. 1.2 g of polyethylene glycol (#20,000, manufactured by NOF Corporation) was added to the obtained dispersion liquid to manufacture a paste.

The obtained paste was applied onto the first transparent electrode layer by a screen printing method so that the thickness was 2 µm, dried at 80°C, and then subjected to a UV ozone treatment at 90°C for 20 minutes to form an electron transport layer consisting of a porous titanium oxide particle film.

### - Formation of First Electrochromic Layer -

Subsequently, a 2,2,3,3-tetrafluoropropanol solution including 1.5% by mass of an electrochromic compound I which has reductive color developability and is represented by the following chemical formula was applied by a spin coating method, and then subjected to an annealing treatment at 80°C for 10 minutes to be supported (adsorbed) on the above-described porous titanium oxide particle film, thereby forming a first electrochromic layer.

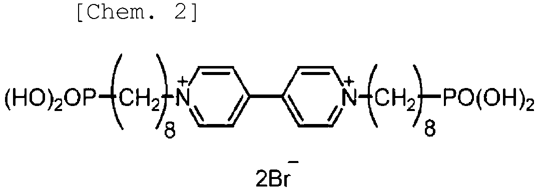

### - Formation of Second Transparent Electrode Layer -

A polycarbonate resin substrate having the same shape and the same thickness as those of the first support described above was prepared as a second support. On the second support, an ITO film was formed to a thickness of about 50 nm by a sputtering method in the same manner as the first transparent electrode, a silver alloy was laminated thereon to a thickness of 5 nm, and an ITO film was laminated thereon to a thickness of 50 nm to obtain a multilayer (IAI), thereby forming a second transparent electrode layer.

### - Formation of Second Electrochromic Layer -

On the second transparent electrode layer, a solution obtained by mixing polyethylene glycol diacrylate (PEG400DA, manufactured by Nippon Kayaku Co., Ltd.), a photoinitiator (IRGACURE 184, manufactured by BASF SE), and as an electrochromic material having oxidative color developability, a radically polymerizable compound II having a triarylamine, which is represented by the following formula, and 2-butanone at a mass ratio (57:3:140:800) was prepared.

Thereafter, the prepared solution was applied onto an ITO glass substrate by a spin coating method.

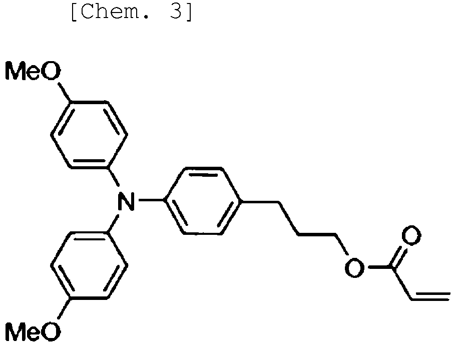

(In the formula, Me represents a methyl group.)

Next, UV curing was carried out under a nitrogen atmosphere through a quartz substrate having a pattern of a Cr layer, and then a patterned second electrochromic layer having a thickness of 1.2 µm, which included a compound represented by the radically polymerizable compound II, was selectively formed on the second transparent electrode layer.

### - Production of Gel Electrolyte -

A solution obtained by mixing a polymerizable material (V3877, manufactured by DAIDO CHEMICAL CORPORATION) and an electrolyte (1-ethyl-3-methylimidazolium tetracyanoborate (EMIMTCB)) at a ratio (20:80), and then mixing 0.5% by mass of a photopolymerization initiator (IRGACURE 184, manufactured by Nippon Kayaku Co., Ltd.) with respect to the polymerizable material described above was applied onto a surface of a PET film (NP75C, manufactured by PANAC Co., Ltd.) that had been subjected to a release treatment, a PET film (NP75A, manufactured by PANAC CO., LTD.) that had been subjected to a release treatment was bonded to the above-described PET film, and curing was carried out with ultraviolet rays (UV) to produce a gel electrolyte.

### - Bonding Process -

The release film was peeled off from the produced gel electrolyte, and the gel electrolyte was subjected to a bonding treatment on the surface of the first electrochromic layer.

Subsequently, the prepared sealing material 1 was applied by a dispenser method to surround the periphery of the side surface of the first electrochromic layer.

Thereafter, the surface of the second electrochromic layer on the second support and the surface of the gel electrolyte were bonded to each other, the sealing material was pressed and spread to cover the side surfaces of the first electrochromic layer and the second electrochromic layer with the sealing material, irradiated with ultraviolet rays at 3 J/cm² (temporary curing), and subjected to a heat curing treatment (main curing) at 100°C for 1 hour, the sealing material was cured to form a sealing part, and an electrochromic sheet was manufactured.

### <Example 2>

An electrochromic sheet was manufactured in the same manner as in Example 1, except that the first transparent electrode layer of Example 1 was formed by forming an ITO film to a thickness of about 100 nm by a sputtering method.

### <Example 3>

An electrochromic sheet was manufactured in the same manner as in Example 1, except that the first transparent electrode layer and the second transparent electrode layer of Example 1 were formed by forming an ITO film to a thickness of about 130 nm by a sputtering method.

### <Comparative Example 1>

An electrochromic sheet was manufactured in the same manner as in Example 1, except that the first transparent electrode layer and the second transparent electrode layer of Example 1 were formed by forming an ITO film to a thickness of about 100 nm by a sputtering method.

### (3) Measurement and Evaluation

Next, the obtained electrochromic sheet was subjected to the following measurement and evaluation. The results are shown in Table 1.

### [Optical Characteristics]

The reflectivity (%) and the L* value, the a* value, and the b* value of the reflected light in the CIE 1976 L*a*b* chromaticity coordinates were each determined in a case where the light reflected from a surface of each of the obtained electrochromic sheets on the first support layer side, obtained by irradiating the surface with light at an incidence angle of 90° from a D65 light source, was measured at a viewing angle of 10° using a spectrophotometer.

Similarly, the transmittance (%), and the L* value, the a* value, and the b* value of the reflected light in the CIE 1976 L*a*b* chromaticity coordinates were each determined in a case where the light transmitted from a surface of each of the obtained electrochromic sheets on the first support layer side, obtained by irradiating the surface with light at an incidence angle of 90° from a D65 light source was measured at a viewing angle of 10° using a spectrophotometer.

### · Spectrophotometer "V-670" manufactured by JASCO Corporation

### [Deformation Amount]

A test piece (having a maximum length of equal to or more than 20 mm) in which the electrolyte layer was located at a central part and the sealing member was located at an outer edge was manufactured using each of the obtained electrochromic sheets, the test piece was chucked at both ends by a chucking part, the central part of the test piece is pressed at 30 N for 30 seconds, and a difference in depth between the central part of the test piece before being pressed and the central part of the test piece after being pressed was determined and defined as a deformation amount (mm).

### [Reflection Color Tint and Transparency (Degree of Freedom in Design)]

Under the sunlight on a clear day, in a case where each of the obtained electrochromic sheets was held up and examined by a skilled technician, each of the perceived "reflection color tint" and "transparency" of the electrochromic sheet was evaluated in accordance with the following criteria.
A: Very good. There is no sense of discomfort as an eyeglass lens.
B: There is a slight sense of discomfort, but there is no problem as an eyeglass lens.
C: The lens has an obvious sense of discomfort as an eyeglass lens.

**[Table 1]**

| | | Comparative Example 1 | Example 1 | Example 2 | Example 3 |
|---|---|---|---|---|---|
| Transparent electrode 1 (thickness: nm) | | ITO | IAI | ITO | ITO |
| | | 100 | 50/5/50 | 100 | 130 |
| Transparent electrode 2 (thickness: nm) | | ITO | IAI | IAI | ITO |
| | | 100 | 50/5/50 | 50/5/50 | 130 |
| %R average | % | 16.2 | 11.3 | 14.0 | 9.7 |
| %T average | % | 78.8 | 70.8 | 74.6 | 80.8 |
| Reflected light R | L* | 47.0 | 36.7 | 42.3 | 37.3 |
| | a* | 2.6 | 2.1 | 2.9 | 12.6 |
| | b* | 11.9 | -1.1 | 6.9 | -13.2 |
| Transmitted light T | L* | 92.1 | 89.0 | 90.6 | 92.1 |
| | a* | -1.6 | -1.3 | -1.5 | -2.8 |
| | b* | -1.7 | 0.4 | -0.7 | 7.7 |
| Deformation amount | mm | 0.05 | 0.06 | 0.05 | 0.04 |
| Reflected color tint | | C | A | B | B |
| Transparency | | A | B | A | B |

The present application claims priority based on Japanese Patent Application No. 2023-096391 filed on June 12, 2023, and Japanese Patent Application No. 2023-129084 filed on August 8, 2023, the disclosure of which is incorporated herein in its entirety.

### REFERENCE SIGNS LIST

- 1: first transparent base material layer
- 2: first transparent electrode layer
- 3: first electrochromic layer
- 4: electrolyte layer
- 5: second electrochromic layer
- 6: second transparent electrode layer
- 7: second transparent base material layer
- 8: sealing member
- 10: electrochromic element
- 21: auxiliary electrode layer
- 22: columnar conductive part
- 30: bare lens
- 35: resin layer
- 40: metal mold
- 41: upper mold
- 42: lower mold
- 50: protective film
- 61: auxiliary electrode layer
- 62: columnar conductive part
- 70a: grip part
- 70b: grip part
- 70c: grip part
- 100: electrochromic sheet
- 110: electrochromic sheet
- 120: curved sheet
- 210: connecting sheet laminate
- 220: curved element laminate
- 250: element laminate
- 300: electrochromic lens

## Claims

1. An electrochromic lens comprising:
an electrochromic element;
a sealing member that covers a side surface of the electrochromic element; and
a pair of transparent base material layers that sandwich the electrochromic element and the sealing member,
wherein the electrochromic lens satisfies the following Requirement a, (Requirement a) in a case where a length of an edge on an inner peripheral side of the sealing member is taken as L (mm), an area of a region occupied by the sealing member is taken as S (mm²), and S/L is taken as W (mm), which are measured in an orthographic projection in a case of viewing the sealing member through the transparent base material layer from an upper surface of the electrochromic lens,
a first region where W is less than 1 mm and a second region where W is equal to or more than 1.5 mm are present,
in a case where an area of the first region is taken as S1 (mm²) and an area of the second region is taken as S2 (mm²), S1/S (percentage) is equal to or more than 50% and S2/S (percentage) is 1% to 40%, and
in a case where a length of 4 mm at any position of the edge on the inner peripheral side of the sealing member is taken as La, an area of a region occupied by the sealing member including La is taken as Sa (mm²), and Sa/La is taken as Wa (mm), the second region includes a region where Wa (mm) is equal to or more than 1.5 mm.

2. The electrochromic lens according to Claim 1,
wherein the electrochromic lens has a through-electrode that penetrates the sealing member in the second region.

3. The electrochromic lens according to Claim 1 or 2,
wherein the electrochromic lens has a grip part in the second region.

4. The electrochromic lens according to Claim 1 or 2,
wherein the sealing member is formed of a resin composition including a curable resin.

5. The electrochromic lens according to Claim 1 or 2,
wherein the electrochromic element is a solid or a gel, having a laminated structure in which an electrolyte layer and an electrochromic layer are laminated.

6. The electrochromic lens according to Claim 5,
wherein the electrolyte layer is a solid or a gel.

7. The electrochromic lens according to Claim 1 or 2, further comprising:
an electrode layer between the transparent base material layer and the electrochromic element.

8. The electrochromic lens according to Claim 1 or 2,
wherein the transparent base material layer includes one or two or more selected from an episulfide-based resin, a thiourethane-based resin, an acryl-based resin, a polycarbonate-based resin, a urethane-based resin, a polyamide-based resin, a polyester-based resin, a cellulose-based resin, a cycloolefin polymer (COP), a cycloolefin copolymer (COC), a norbornene-based resin, and a silicone-based resin.

9. An electrochromic device using the electrochromic lens according to Claim 1 or 2.

10. A method for using an electrochromic sheet that includes an electrochromic element, a sealing member that covers a side surface of the electrochromic element, and a pair of transparent base material layers that sandwich the electrochromic element and the sealing member, the method comprising:
processing an electrochromic sheet to form an electrochromic lens satisfying the following Requirement b, using the electrochromic sheet,
(Requirement b) in a case where a length of an edge of the sealing member on an inner peripheral side is taken as L (mm), an area of a region occupied by the sealing member is taken as S (mm²), and S/L is taken as W (mm), which are measured in an orthographic projection in a case of viewing the sealing member through the transparent base material layer from an upper surface of the electrochromic lens,
a first region where W is less than 1 mm and a second region where W is equal to or more than 1.5 mm are present,
in a case where an area of the first region is taken as S1 (mm²) and an area of the second region is taken as S2 (mm²), S1/S (percentage) is equal to or more than 50% and S2/S (percentage) is 1% to 40%, and
in a case where a length of 4 mm at any position of the edge on the inner peripheral side of the sealing member is taken as La, an area of a region occupied by the sealing member including La is taken as Sa (mm²), and Sa/La is taken as Wa (mm), the second region includes a region where Wa (mm) is equal to or more than 1.5 mm.

11. An electrochromic sheet comprising:
a support layer;
an electrolyte layer provided over the support layer;
an electrochromic layer provided over at least one surface of the electrolyte layer; and
a pair of transparent electrode layers provided over the support layer and positioned to sandwich the electrolyte layer and the electrochromic layer,
wherein the electrochromic sheet is configured to satisfy the following Condition 1, (Condition 1)
a* and b* in CIE 1976 L*a*b* chromaticity coordinates of reflected light obtained by irradiating a surface of the electrochromic sheet on a side of the support layer with light at an incidence angle of 90° from a D65 light source are -15 to 15 and -20 to 10, respectively, in a case where the reflected light is measured at a viewing angle of 10° using a spectrophotometer.

12. The electrochromic sheet according to Claim 11,
wherein the electrochromic sheet is further configured to satisfy the following Condition 2, (Condition 2)
L* in CIE 1976 L*a*b* chromaticity coordinates of reflected light obtained by irradiating a surface of the electrochromic sheet on a side of the support layer with light from a D65 light source at an incidence angle of 90° is 20 to 50 in a case where the reflected light is measured at a viewing angle of 10° using a spectrophotometer.

13. The electrochromic sheet according to Claim 11 or 12,
wherein the electrochromic sheet is further configured to satisfy the following Condition 3, (Condition 3)
a transmittance of light obtained by irradiating a surface of the electrochromic sheet on a side of the support layer with light at an incidence angle of 90° from a D65 light source is 70% to 99% in a case where transmitted light is measured at a viewing angle of 10° using a spectrophotometer.

14. The electrochromic sheet according to Claim 11 or 12, further comprising:
a sealing member provided over the support layer and covering side surfaces of the electrolyte layer and the electrochromic layer,
wherein the electrochromic sheet is further configured to satisfy the following Condition 4, (Condition 4)
in a case where a test piece (having a maximum length of equal to or more than 20 mm) in which the electrolyte layer is located at a central part and the sealing member is located at an outer edge is produced by using the electrochromic sheet, the test piece is chucked at both ends by a chucking part, the central part of the test piece is pressed at 30 N for 30 seconds, and a difference in depth between the central part of the test piece before being pressed and the central part of the test piece after being pressed is defined as a deformation amount (mm), the deformation amount is 0.01 mm to 0.09 mm.

15. The electrochromic sheet according to Claim 11 or 12,
wherein a thickness of the transparent electrode layer is 40 to 200 nm.

16. The electrochromic sheet according to Claim 11 or 12,
wherein at least one of the pair of the transparent electrode layers has a multilayer structure.

17. The electrochromic sheet according to Claim 11 or 12,
wherein the transparent electrode layer contains one or ten or more selected from tin-doped indium oxide (ITO), fluorine-doped tin oxide (FTO), antimony-doped tin oxide (ATO), zinc-doped indium oxide (IZO), silver (Ag) and a silver alloy, as well as polypyrrole, polyaniline, polythiophene, poly(p-phenylene), polyfluorene, and derivatives thereof.

18. The electrochromic sheet according to Claim 11 or 12,
wherein the transparent electrode layer has a single-layer or multilayer structure including a layer formed of any material selected from tin-doped indium oxide (ITO), fluorine-doped tin oxide (FTO), antimony-doped tin oxide (ATO), zinc-doped indium oxide (IZO), ad silver (Ag), and a silver alloy, and a polypyrrole, a polyaniline, a polythiophene, a poly(p-phenylene), a polyfluorene, and derivatives thereof.

19. The electrochromic sheet according to Claim 11 or 12,
wherein materials constituting the pair of transparent electrode layers are different from each other.

20. The electrochromic sheet according to Claim 11 or 12,
wherein materials constituting the pair of transparent electrode layers are the same as each other.

21. The electrochromic sheet according to Claim 11 or 12,
wherein the support layer includes one or ten or more selected from an episulfide-based resin, a thiourethane-based resin, an acryl-based resin, a polycarbonate-based resin, a urethane-based resin, a polyamide-based resin, a polyester-based resin, a cellulose-based resin, a cycloolefin polymer (COP), a cycloolefin copolymer (COC), a norbornene-based resin, and a silicone-based resin.

22. An electrochromic device using the electrochromic sheet according to Claim 11 or 12.
